# DEMANDE DE BREVET EUROPEEN

(11) **EP 4 725 847 A1**
(43) Date de publication de la demande: **15.04.2026**
(21) Numéro de dépôt: 25207394.5
(22) Date de dépôt: 08.10.2025
(51) Int. Cl.: B64D 37/30, B64D 37/32, B64D 37/20, F17C 1/00

(54) **DISPOSITIF D'ALIMENTATION EN HYDROGÈNE COMPRENANT DES ÉQUIPEMENTS RÉPARTIS DANS DES CONTENANTS RELIÉS PAR AU MOINS UN TRONÇON DE RACCORDEMENT DE MANIÈRE À FORMER UN ENSEMBLE COMPACT**

(30) Priorité: 14.10.2024 FR 2411067
(71) Demandeur: AIRBUS OPERATIONS (S.A.S.), 31060 Toulouse (FR)
(72) Inventeur: SICK, Frédéric, 31060 Toulouse (FR)
(74) Mandataire: Fantin, Laurent

(57) **Abrégé**

L'invention a pour objet un dispositif d'alimentation en hydrogène comprenant un réservoir d'hydrogène (52) ainsi qu'au moins un circuit d'hydrogène (54) qui comporte :
- au moins un premier tronçon (56), positionné dans un premier contenant (76) étanche à l'air, comprenant au moins un équipement d'une première catégorie (66),
- au moins un deuxième tronçon (58), positionné dans un deuxième contenant (78) étanche à l'air démontable, comprenant au moins un équipement d'une deuxième catégorie (68),
- au moins un tronçon de raccordement (60), reliant les premier et deuxième tronçons (56, 58), positionné sous le premier contenant (76) et sous le deuxième contenant (78) ou positionné sous le premier contenant (76) et entre le deuxième contenant (78) et le réservoir d'hydrogène (52).

Cette solution contribue à améliorer la compacité du dispositif et à faciliter le démontage et la manutention du deuxième contenant (58) démontable.

## Description

La présente demande se rapporte à un dispositif d'alimentation en hydrogène comprenant des équipements répartis dans des contenants reliés par au moins un tronçon de raccordement de manière à former un ensemble compact ainsi qu'à un aéronef comportant au moins un tel dispositif d'alimentation en hydrogène.

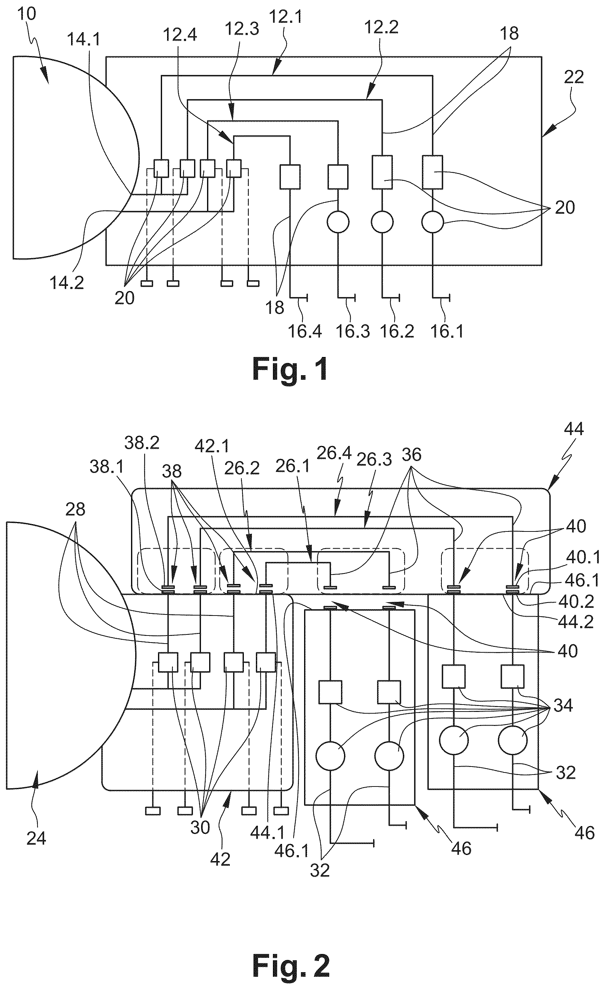

Selon un premier mode de réalisation de l'art antérieur visible sur la figure 1, un dispositif d'alimentation en hydrogène d'un aéronef comprend au moins un réservoir d'hydrogène 10 ainsi que plusieurs circuits d'hydrogène 12.1 à 12.4 présentant chacun au moins une extrémité amont 14.1 à 14.2 reliée au réservoir d'hydrogène10 et au moins une extrémité aval 16.1 à 16.4 reliée notamment à au moins un moteur à hydrogène ou à au moins une pile à combustible.

Les notions amont et aval font référence au sens d'écoulement de l'hydrogène dans chacun des circuits d'hydrogène, qui s'écoule de l'amont vers l'aval.

Chaque circuit d'hydrogène 12.1 à 12.4 comprend des conduits 18 ainsi que différents équipements 20, comme des pompes, des capteurs, des vannes ou des échangeurs par exemple, reliés entre eux par les conduits 18.

Comme illustré sur la figure 1, les équipements 20 et les conduits 18 sont positionnés dans un contenant 22 étanche à l'air dans lequel un gaz inerte est injecté ou un vide réalisé. Ce contenant 22 est relié au réservoir d'hydrogène 10.

Pour pouvoir réaliser des opérations de maintenance ou de réparation sur les équipements 20 positionnés dans le contenant 22, il est nécessaire de démonter le réservoir d'hydrogène 10 et le contenant 22 pour les sortir de l'aéronef afin de pouvoir ouvrir le contenant 22 et accéder aux équipements 20. Une fois l'opération de maintenance ou de réparation effectuée, le réservoir d'hydrogène 10 et le contenant 22 sont remontés dans l'aéronef.

Ce premier mode de réalisation n'est pas satisfaisant car il conduit à des temps d'immobilisation de l'aéronef importants.

Pour remédier à cet inconvénient, le document EP4382433 propose un deuxième mode de réalisation visible sur la figure 2. Selon ce deuxième mode de réalisation, un dispositif d'alimentation en hydrogène comprend un réservoir d'hydrogène 24 ainsi que plusieurs circuits d'hydrogène 26.1 à 26.4 comportant chacun un premier tronçon amont 28 au niveau duquel sont prévus des premiers équipements 30 ne nécessitant pas de maintenance, un tronçon aval 32 au niveau duquel sont prévus des deuxièmes équipements 34 nécessitant une maintenance, un tronçon de raccordement 36 sans équipements intercalé entre les tronçons amont et aval 28, 32 ; un premier système de raccordement 38 reliant les tronçons amont 28 et de raccordement 36 et un deuxième système de raccordement 40 reliant les tronçons aval et de raccordement 32, 36. Chacun des premier et deuxième systèmes de raccordement 38, 40 présente des première et deuxième parties 38.1, 40.1/38.2, 40.2 configurées pour occuper un état connecté dans lequel les première et deuxième parties sont reliées et assurent une continuité fluidique ainsi qu'un état déconnecté dans lequel les première et deuxième parties sont espacées.

En complément, le dispositif d'alimentation en hydrogène comprend un contenant amont 42 fixe et solidaire du réservoir d'hydrogène 24 dans lequel sont positionnés les tronçons amonts 28 des différents circuits d'hydrogène 26.1 à 26.4, un contenant de raccordement 44 amovible dans lequel sont positionnés les tronçons de raccordement 36 des différents circuits d'hydrogène 26.1 à 26.4 ainsi qu'au moins un contenant aval 46 amovible dans lequel sont positionnés les tronçons avals 32 des circuits d'hydrogène 26.1 à 26.4.

Le contenant amont 42 est sensiblement parallélépipédique et comprend une face supérieure 42.1 au niveau de laquelle sont positionnées les premières parties 38.1 des premiers systèmes de raccordement 38. Le contenant aval 46 est sensiblement parallélépipédique et comprend une face supérieure 46.1 au niveau de laquelle sont positionnées les deuxièmes parties 40.2 des deuxièmes systèmes de raccordement 40. Le contenant de raccordement 44 comprend une face inférieure qui présente une première zone 44.1 au niveau de laquelle sont positionnées les deuxièmes parties 38.2 des premiers systèmes de raccordement 38 ainsi qu'une deuxième zone 44.2 au niveau de laquelle sont positionnées les premières parties 40.1 des deuxièmes systèmes de raccordement 40.

Le dispositif d'alimentation en hydrogène comprend un premier système de liaison démontable pour relier le contenant amont 42 et le contenant de raccordement 44 ainsi qu'un deuxième système de liaison démontable pour relier le contenant de raccordement 44 et le contenant aval 46.

En fonctionnement, lorsqu'il est assemblé, le contenant de raccordement 44 est positionné au-dessus du contenant amont 42, la première zone 44.1 de sa face inférieure étant en contact avec la face supérieure 42.1 du contenant amont 42, les premières et deuxièmes parties 38.1, 38.2 des premiers systèmes de raccordement 38 étant à l'état connecté. Lorsqu'il est assemblé, le contenant aval 46 est positionné au-dessous du contenant de raccordement 44, sa face supérieure 46.1 étant en contact avec la deuxième zone 44.2 de la face inférieure du contenant de raccordement 44, les premières et deuxièmes parties 40.1, 40.2 des deuxièmes systèmes de raccordement 40 étant à l'état connecté.

Selon ce deuxième mode de réalisation, seul le contenant aval 46 dans lequel est positionné le deuxième équipement 34 devant faire l'objet d'une opération de réparation ou de maintenance est démonté et manipulé. Sa masse et son volume étant réduits par rapport à ceux d'un contenant unique du premier mode de réalisation, l'ensemble démonté peut être plus facilement démonté et manipulé, ce qui simplifie les opérations de réparation et de maintenance.

Toutefois, ce deuxième mode de réalisation n'est pas pleinement satisfaisant car le positionnement des contenants avals 46, suspendus sous le contenant de raccordement 44 et en porte-à-faux par rapport au contenant amont 42, impose un renforcement des systèmes de liaison démontables, ce qui contribue à augmenter la masse du dispositif d'alimentation en hydrogène.

La présente invention vise à remédier à tout ou partie des inconvénients de l'art antérieur. A cet effet, l'invention a pour objet un dispositif d'alimentation en hydrogène comprenant un réservoir d'hydrogène ainsi qu'au moins un circuit d'hydrogène, relié au réservoir d'hydrogène, qui comporte :
- au moins un premier tronçon, positionné dans un premier contenant étanche à l'air, comprenant au moins un équipement d'une première catégorie,
- au moins un deuxième tronçon, positionné dans un deuxième contenant étanche à l'air, comprenant au moins un équipement d'une deuxième catégorie,
- au moins un tronçon de raccordement qui s'étend entre une première extrémité reliée au premier tronçon par un premier système de raccordement et une deuxième extrémité reliée au deuxième tronçon par un deuxième système de raccordement démontable.

Selon l'invention, le tronçon de raccordement est positionné sous les premier et deuxième contenants ou positionné sous le premier contenant et entre le deuxième contenant et le réservoir d'hydrogène. En complément, le dispositif d'alimentation en hydrogène comprend au moins un système de liaison reliant d'une part le premier contenant et, d'autre part, le tronçon de raccordement, un contenant de raccordement dans lequel est positionné le tronçon de raccordement ainsi qu'un collecteur de raccordement compris dans le premier tronçon et/ou le réservoir d'hydrogène, le système de liaison comprenant plusieurs tiges ou biellettes qui présentent chacune une première extrémité reliée au réservoir d'hydrogène ainsi qu'une deuxième extrémité reliée au premier contenant.

Cette solution permet d'obtenir un dispositif d'alimentation en hydrogène compact dans un plan horizontal, ce qui facilite son implantation. Elle contribue également à faciliter le démontage et la manutention du deuxième contenant lorsqu'il doit être remplacé ou que l'un de ses composants doit être réparé.

Selon une autre caractéristique, le tronçon de raccordement comprend au moins un collecteur de raccordement rigide assurant une continuité fluidique entre le premier tronçon et le deuxième tronçon, ledit collecteur de raccordement étant configuré pour être relié à une structure d'aéronef et/ou au réservoir d'hydrogène.

Selon une autre caractéristique, le dispositif d'alimentation en hydrogène comprend au moins un contenant de raccordement, dans lequel est positionné le tronçon de raccordement, comprenant une première paroi sensiblement horizontale, le premier contenant étant positionné au-dessus de la première paroi et comportant une paroi inférieure en contact avec la première paroi ou faiblement espacée de cette dernière.

Selon une autre caractéristique, le premier contenant est cylindrique et présente un axe de révolution sensiblement vertical.

Selon une autre caractéristique, le premier tronçon comprend un premier collecteur rigide, positionné dans le premier contenant, auquel sont reliés plusieurs équipements de la première catégorie.

Selon une autre caractéristique, le premier collecteur s'étend selon une direction parallèle à l'axe de révolution.

Selon une autre caractéristique, le premier système de raccordement est permanent.

Selon une autre caractéristique, le premier système de raccordement est démontable.

Selon une autre caractéristique, le deuxième contenant est cylindrique et présente un axe de révolution sensiblement horizontal.

Selon une autre caractéristique, le deuxième tronçon comprend au moins un deuxième collecteur rigide, positionné dans le deuxième contenant, auquel sont reliés plusieurs équipements de la deuxième catégorie.

Selon une autre caractéristique, le deuxième collecteur s'étend selon une direction parallèle à l'axe de révolution.

Selon une autre caractéristique, le deuxième contenant comprend au moins un support sur lequel sont fixés au moins un des équipements de la deuxième catégorie, au moins un conduit reliant des équipements de la deuxième catégorie et/ou au moins un deuxième collecteur.

Selon une autre caractéristique, le dispositif d'alimentation en hydrogène comprend au moins un système de liaison démontable configuré pour relier d'une part le deuxième contenant et, d'autre part, le tronçon de raccordement ainsi qu'un contenant de raccordement dans lequel est positionné le tronçon de raccordement et/ou une structure d'aéronef.

L'invention a également pour objet un aéronef comprenant au moins un dispositif d'alimentation en hydrogène selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un dispositif d'alimentation en hydrogène illustrant un premier mode de réalisation de l'art antérieur,
- La figure 2 est une représentation schématique d'un dispositif d'alimentation en hydrogène illustrant un deuxième mode de réalisation de l'art antérieur,
- La figure 3 est une représentation schématique d'un dispositif d'alimentation en hydrogène illustrant un mode de réalisation de l'invention,
- La figure 4 est une vue latérale d'un dispositif d'alimentation en hydrogène illustrant un mode de réalisation de l'invention,
- La figure 5 est une vue en perspective d'un dispositif d'alimentation en hydrogène illustrant un mode de réalisation de l'invention,
- La figure 6 est une vue en perspective d'une partie du dispositif d'alimentation en hydrogène visible sur la figure 5,
- La figure 7 est une vue en perspective des éléments présents dans un contenant amovible illustrant un mode de réalisation de l'invention,
- La figure 8 est une vue latérale d'un dispositif d'alimentation en hydrogène illustrant un autre mode de réalisation de l'invention,
- La figure 9 est une vue de dessus d'une partie du dispositif d'alimentation en hydrogène visible sur la figure 8.

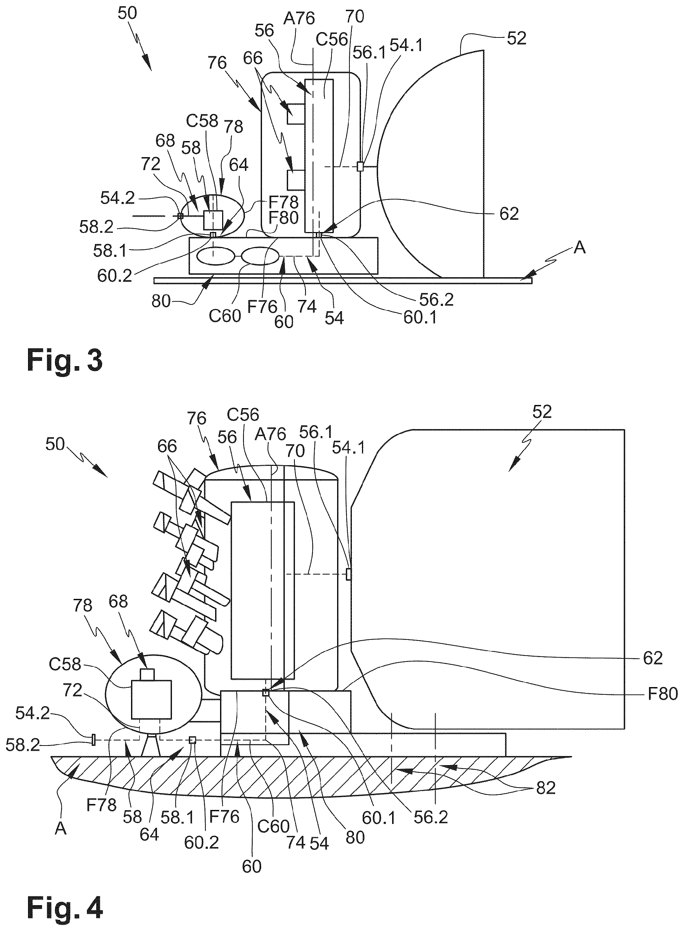

Selon un mode de réalisation visible sur la figure 3, un dispositif d'alimentation en hydrogène 50 comprend au moins un réservoir d'hydrogène 52 ainsi qu'au moins un circuit d'hydrogène 54 qui s'étend entre une extrémité amont 54.1 reliée au réservoir d'hydrogène 52 jusqu'à une extrémité aval 54.2 reliée à un élément (non représenté) comme un moteur à hydrogène, une pile à combustible ou autres. Selon une configuration, le réservoir d'hydrogène 52 est configuré pour stocker de l'hydrogène à l'état cryogénique. Au moins une partie du circuit d'hydrogène 54 est configurée pour canaliser de l'hydrogène à l'état cryogénique.

Selon une application, un aéronef comprend au moins un dispositif d'alimentation en hydrogène 50. Selon cette application, l'aéronef comprend une structure d'aéronef A à laquelle est relié de manière rigide le réservoir d'hydrogène 52.

Le dispositif d'alimentation en hydrogène 50 peut comprendre plusieurs circuits d'hydrogène. Dans un but de clarté, seul un circuit d'hydrogène 54 est représenté sur les figures 3, 4, 8 et 9.

Le circuit d'hydrogène 54 comprend un premier tronçon 56 qui s'étend entre des première et deuxième extrémités 56.1, 56.2, un deuxième tronçon 58 qui s'étend entre des première et deuxième extrémités 58.1, 58.2 ainsi qu'au moins un tronçon de raccordement 60 qui s'étend entre des première et deuxième extrémités 60.1, 60.2.

Selon le mode de réalisation visible sur la figure 3, la première extrémité 56.1 du premier tronçon 56 correspond à l'extrémité amont 54.1 du circuit d'hydrogène 54 et la deuxième extrémité 58.2 du deuxième tronçon 58 correspond à l'extrémité aval 54.2 du circuit d'hydrogène 54. Ce dernier comprend un unique tronçon de raccordement 60, un premier système de raccordement 62 reliant de manière démontable la deuxième extrémité 56.1 du premier tronçon 56 et la première extrémité 60.1 du tronçon de raccordement 60, un deuxième système de raccordement 64 reliant de manière démontable la deuxième extrémité 60.2 du tronçon de raccordement 60 et la première extrémité 58.1 du deuxième tronçon 58.

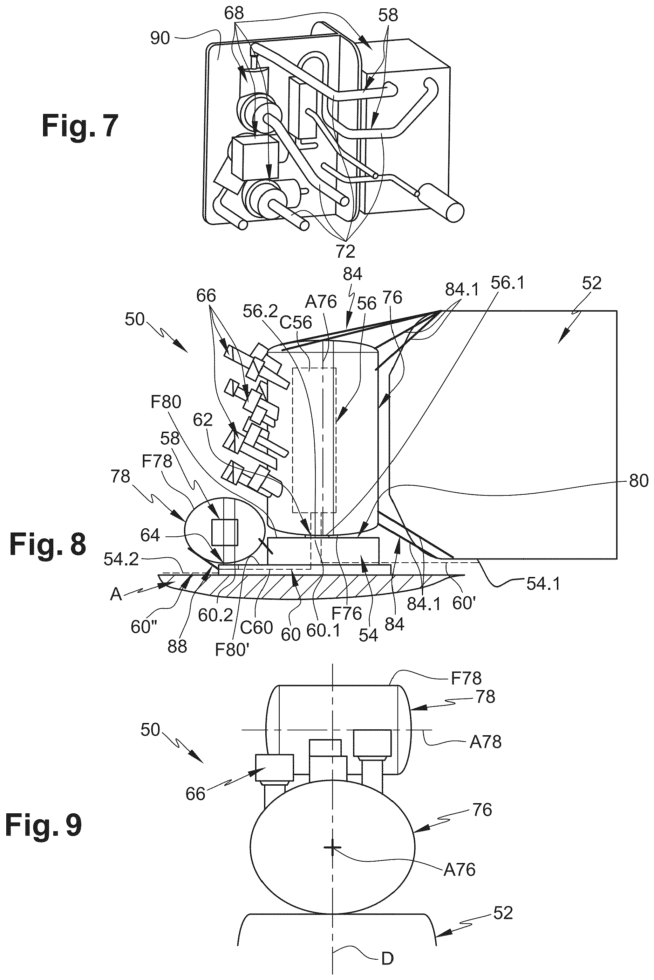

Bien entendu, l'invention n'est pas limitée à ce mode de réalisation. Selon un autre mode de réalisation visible sur la figure 8, le dispositif d'alimentation en hydrogène 50 comprend un premier tronçon de raccordement 60 reliant les premier et deuxième tronçons 56, 58, un deuxième tronçon de raccordement 60' reliant l'extrémité amont 54.1 du circuit d'hydrogène 54 et le premier tronçon 56 ainsi qu'un troisième tronçon de raccordement 60" reliant le deuxième tronçon 58 et l'extrémité aval 54.2 du circuit d'hydrogène 54, les différents tronçons 56, 58, 60, 60', 60" étant raccordés de manière démontable entre eux par des systèmes de raccordement configurés pour occuper chacun un état connecté dans lequel le système de raccordement assure une continuité fluidique entre les deux tronçons raccordés et un état déconnecté dans lequel le système de raccordement permet d'écarter les deux tronçons.

Ces systèmes de raccordement ne sont pas plus décrits car ils peuvent être identiques à ceux de l'art antérieur.

Quel que soit le mode de réalisation, le circuit d'hydrogène s'étend depuis une extrémité amont 54.1 reliée au réservoir d'hydrogène 52 et comprend au moins un premier tronçon 56, au moins un deuxième tronçon 58, au moins un tronçon de raccordement 60 ainsi qu'au moins un système de raccordement démontable 64 reliant le tronçon de raccordement 60 et le deuxième tronçon 58. Selon une configuration, le premier tronçon 56 et le tronçon de raccordement 60 sont reliés entre eux de manière permanente. Selon cette configuration, le premier système de raccordement 62 est permanent et obtenu par soudage du premier tronçon 56 et du tronçon de raccordement 60. Selon une autre configuration, le premier tronçon 56 et le tronçon de raccordement 60 sont également reliés par un système de raccordement démontable 62.

Le circuit d'hydrogène 54 comprend au moins un équipement d'une première catégorie 66 incorporé au premier tronçon 56 ainsi qu'au moins un équipement d'une deuxième catégorie 68 incorporé au deuxième tronçon 58. Selon une configuration, le circuit d'hydrogène 54 peut comprendre plusieurs équipements de la première catégorie 66, tous incorporés au(x) premier(s) tronçon(s) 56, et/ou plusieurs équipements de la deuxième catégorie 68 tous incorporés au(x) deuxième(s) tronçon(s) 58. Ainsi, un premier tronçon 56 s'étend entre au moins une première extrémité 56.1 et au moins une deuxième extrémité 56.2 et comprend au moins un équipement d'une première catégorie 66 ainsi que des premiers conduits 70 pour canaliser l'hydrogène de la première extrémité 56.1 jusqu'à la deuxième extrémité 56.2. Un deuxième tronçon 58 s'étend entre au moins une première extrémité 58.1 et au moins une deuxième extrémité 58.2 et comprend au moins un équipement d'une deuxième catégorie 68 ainsi que des deuxièmes conduits 72 pour canaliser l'hydrogène de la première extrémité 58.1 jusqu'à la deuxième extrémité 58.2. Généralement, un tronçon de raccordement 60 ne comprend aucun équipement et ne comprend que des conduits de raccordement 74.

Les équipements de la première catégorie 66 sont des équipements ne nécessitant pas de maintenance et configurés pour avoir une durée de vie supérieure ou égale à celle d'un aéronef. A titre d'exemple, les équipements de la première catégorie 66 peuvent être des vannes ou des capteurs de mesure indirecte.

Les équipements de la deuxième catégorie 68 nécessitent une maintenance et sont susceptibles d'être réparés. A titre d'exemple, les équipements de la deuxième catégorie 68 peuvent être des échangeurs thermiques, des évaporateurs ou des capteurs de mesure directe.

Le dispositif d'alimentation en hydrogène 50 comprend au moins un premier contenant 76 dans lequel est positionné au moins un premier tronçon 56 ainsi qu'au moins un deuxième contenant 78 dans lequel est positionné au moins un deuxième tronçon 58. Le dispositif d'alimentation en hydrogène 50 peut comprendre au moins un contenant de raccordement 80 dans lequel est positionné au moins un tronçon de raccordement 60.

Les différents contenants 76, 78, 80 sont des contenants étanches à l'air dans chacun desquels un gaz inerte est injecté ou un vide réalisé. Le gaz inerte est par exemple de l'hélium. Le vide correspond par exemple à un niveau de pression dans le contenant 76, 78, 80 inférieur à un seuil de pression prédéterminé, par exemple choisi dans l'intervalle [1 x 10-6 mbar ; 50 mbar] selon le niveau d'exigence requis.

Selon une configuration, le dispositif d'alimentation en hydrogène 50 comprend un unique premier contenant 76 dans lequel sont positionnés plusieurs premiers tronçons 56 de différents circuits d'hydrogène 54. En variante, le dispositif d'alimentation en hydrogène 50 pourrait comprendre plusieurs premiers contenants 76 dans chacun desquels est positionné le premier tronçon 56 d'au moins un circuit d'hydrogène 54.

Le dispositif d'alimentation en hydrogène 50 comprend un unique deuxième contenant 78 dans lequel sont positionnés plusieurs deuxièmes tronçons 58 de différents circuits d'hydrogène 54. En variante, le dispositif d'alimentation en hydrogène 50 comprend plusieurs deuxièmes contenants 78 dans chacun desquels est positionné le deuxième tronçon 58 d'au moins un circuit d'hydrogène 54.

Selon un mode de réalisation, le dispositif d'alimentation en hydrogène 50 comprend un unique contenant de raccordement 80 dans lequel sont positionnés plusieurs tronçons de raccordement 60 de différents circuits d'hydrogène 54. En variante, le dispositif d'alimentation en hydrogène 50 pourrait comprendre plusieurs contenants de raccordement 80 dans chacun desquels est positionné le tronçon de raccordement 60 d'au moins un circuit d'hydrogène 54.

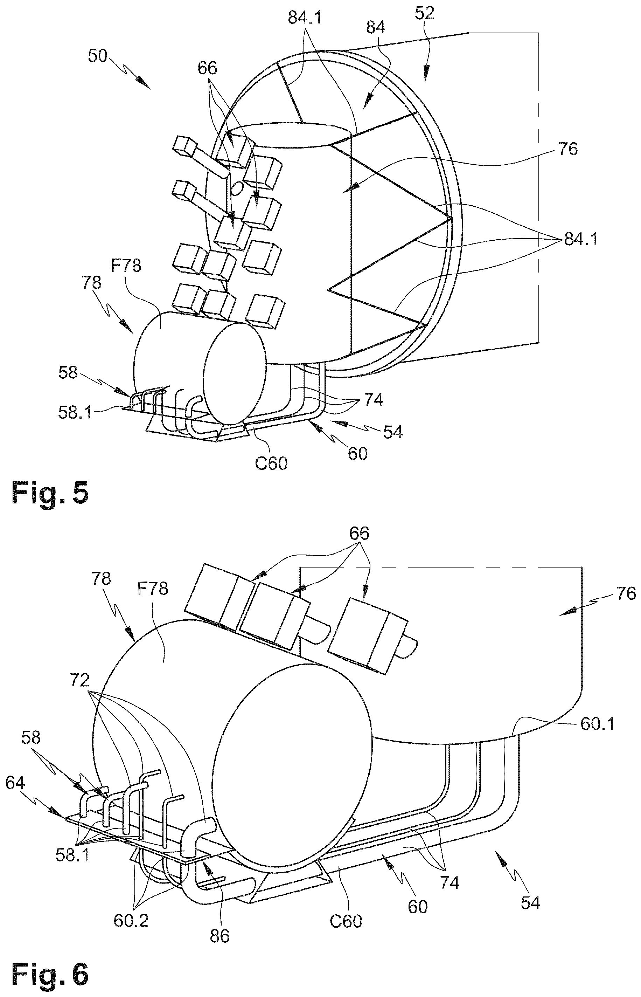

Comme illustré sur les figures 5 et 8, au moins un équipement de la première catégorie 66 peut être positionné en partie à l'intérieur du premier contenant 76 et en partie en dehors du premier contenant 76. A titre d'exemple, un équipement de la première catégorie 66 peut être une vanne encapsulée en position à cheval à l'intérieur et à l'extérieur du premier contenant 76.

Selon une configuration privilégiée, le premier contenant 76 est cylindrique et présente un axe de révolution A76 sensiblement vertical. Il comprend une paroi inférieure F76 sensiblement perpendiculaire à l'axe de révolution A76 ainsi qu'une paroi latérale cylindrique et coaxiale à l'axe de révolution. La paroi inférieure F76 peut présenter une forme de dôme. Le premier contenant 76 est positionné à proximité du réservoir d'hydrogène 52. En parallèle, chaque deuxième contenant 78 est cylindrique et présente un axe de révolution A78 sensiblement horizontal. Il comprend une paroi latérale F78 cylindrique et coaxiale à l'axe de révolution A78. Ces formes et orientations des premier et deuxième contenants 76, 78 contribuent à améliorer la compacité du dispositif d'alimentation en hydrogène 50.

Selon un agencement visible sur la figure 9, le réservoir d'hydrogène 52, le premier contenant 76 et le deuxième contenant 78 sont alignés selon une direction d'alignement D et faiblement espacés entre eux. Cet agencement contribue à obtenir un dispositif d'alimentation en hydrogène 50 compact. L'invention n'est pas limitée à cet agencement.

Selon un mode de réalisation, le contenant de raccordement 80 présente une forme sensiblement parallélépipédique ainsi qu'une première paroi F80 supérieure sensiblement horizontale.

L'ensemble de propulsion comprend au moins un premier système de liaison 82 reliant le contenant de raccordement 80 et la structure d'aéronef A et/ou le réservoir d'hydrogène 52. Selon une particularité de l'invention, le tronçon de raccordement 60 (plus particulièrement le contenant de raccordement 80) est positionné au moins en partie sous le premier contenant 76. Cet agencement contribue à obtenir un dispositif d'alimentation en hydrogène compact selon la direction d'alignement D. Ainsi, le premier contenant 76 est positionné au-dessus de la première paroi F80, la paroi inférieure F76 du premier contenant 76 étant en contact avec la première paroi F80 du contenant de raccordement 80 ou faiblement espacée de cette dernière. Selon cet agencement, le premier système de raccordement 62 comprend des première et deuxième parties positionnées respectivement au niveau de la paroi inférieure du premier contenant 76 et de la première paroi F80 du contenant de raccordement 80.

Selon un autre agencement, la paroi inférieure F76 du premier contenant 76 et la première paroi F80 du contenant de raccordement 80 sont légèrement espacées. Dans ce cas, le premier système de raccordement 62 peut être positionné au niveau de la paroi inférieure F76 du premier contenant 76, au niveau de la première paroi F80 du contenant de raccordement 80 ou entre la paroi inférieure F76 du premier contenant 76 et la première paroi F80 du contenant de raccordement 80.

En complément, le dispositif d'alimentation en hydrogène comprend au moins un deuxième système de liaison 84 reliant d'une part le premier contenant 76 et d'autre part le tronçon de raccordement 60, un contenant de raccordement 80 dans lequel est positionné le tronçon de raccordement 60 et/ou le réservoir d'hydrogène 52. Selon un mode de réalisation visible sur les figures 5 et 8, le deuxième système de liaison 84 comprend plusieurs tiges ou biellettes 84.1 qui présentent chacune une première extrémité reliée au réservoir d'hydrogène 52 ainsi qu'une deuxième extrémité reliée au premier contenant 76. Bien entendu, l'invention n'est pas limitée à ce mode de réalisation pour le deuxième système de liaison 84. Ainsi, le deuxième système de liaison 84 pourrait être démontable. Pour la présente invention, on entend qu'un système de liaison est démontable si les deux éléments reliés par le système de liaison peuvent être séparés et reliés quasiment indéfiniment, l'opération visant à les séparer ou à les relier étant rapidement mise en œuvre avec un nombre réduit d'outils.

Selon un premier agencement visible sur la figure 3, le tronçon de raccordement 60 (plus particulièrement le contenant de raccordement 80) est positionné au moins en partie sous le deuxième contenant 78. Ainsi, la paroi latérale F78 du deuxième contenant 78 est en contact avec la première paroi F80 du contenant de raccordement 80 ou faiblement espacée de cette dernière. Selon ce premier agencement, le deuxième système de raccordement 64 comprend des première et deuxième parties positionnées respectivement au niveau de la première paroi F80 du contenant de raccordement 80 et de la paroi latérale F78 du deuxième contenant 78.

Selon un autre agencement visible sur la figure 4, le tronçon de raccordement 60 (plus particulièrement le contenant de raccordement 80) est décalé selon la direction D par rapport au deuxième contenant 78 et positionné entre ce dernier et le réservoir d'hydrogène 52. Selon cet agencement, la paroi latérale F78 du deuxième contenant 78 n'est pas positionnée au-dessus de la première paroi F80 du contenant de raccordement 80. Le deuxième système de raccordement 64 démontable est situé au niveau de la première paroi F80 du contenant de raccordement 80, au niveau de la paroi latérale F78 du deuxième contenant 78 ou entre la première paroi F80 du contenant de raccordement 80 et la paroi latérale F78 du deuxième contenant 78, notamment au niveau d'une platine 86 solidaire du deuxième contenant 78 ou du contenant de raccordement 80.

Selon un autre agencement visible sur la figure 8, le contenant de raccordement 80 comprend une deuxième paroi F80' sensiblement horizontale et décalée verticalement par rapport à la première paroi F80. Selon cet agencement, le deuxième contenant 78 est positionné sur le contenant de raccordement 80, plus particulièrement sur la deuxième paroi F80' du contenant de raccordement 80. Ainsi, la paroi latérale F78 du deuxième contenant 78 est en contact avec la deuxième paroi F80' du contenant de raccordement 80 ou faiblement espacée de cette dernière. Le deuxième système de raccordement 64 comprend des première et deuxième parties positionnées respectivement au niveau de la paroi latérale F78 du deuxième contenant 78 et de la deuxième paroi F80' du contenant de raccordement 80.

Selon un autre agencement, la paroi latérale F78 du deuxième contenant 78 et la deuxième paroi F80' du contenant de raccordement 80 sont légèrement espacées. Dans ce cas, le deuxième système de raccordement 64 peut être positionné au niveau de la paroi latérale F78 du deuxième contenant 78, au niveau de la deuxième paroi F80' du contenant de raccordement 80 ou entre la paroi latérale F78 du deuxième contenant 78 et la deuxième paroi F80' du contenant de raccordement 80.

Le contenant de raccordement 80 peut contenir des tuyaux de raccordement de type simple paroi et/ou des tuyaux de raccordement de type double ou triple paroi en fonction du type des équipements contenus dans le deuxième contenant 78. Par exemple, lorsque le contenant 78 contient un échangeur thermique avec distribution gazeuse d'hydrogène en aval, des tuyaux de type simple paroi permettent de commencer à réchauffer l'hydrogène liquide avant son introduction dans l'échangeur thermique. Par exemple encore, lorsque le deuxième contenant 78 contient une pompe prévue pour une distribution liquide d'hydrogène, des tuyaux de type double ou triple paroi permettent une meilleure isolation thermique de l'hydrogène liquide.

En complément, le dispositif d'alimentation en hydrogène comprend au moins un troisième système de liaison 88 reliant d'une part le deuxième contenant 78 et, d'autre part, le tronçon de raccordement 60 ainsi qu'un contenant de raccordement 80 dans lequel est positionné le tronçon de raccordement 60 et/ou la structure d'aéronef A. Ce troisième système de liaison 88 est démontable pour pouvoir démonter le deuxième contenant 78. Selon un mode de réalisation visible sur la figure 8, le troisième système de liaison 88 comprend plusieurs tiges ou biellettes qui présentent une première extrémité reliée au deuxième contenant 78 ainsi qu'une deuxième extrémité reliée au contenant de raccordement 80, au moins l'une des première et deuxième extrémités étant reliées de manière démontable. Bien entendu, l'invention n'est pas limitée à ce mode de réalisation pour le troisième système de liaison 88. Quel que soit le mode de réalisation, le deuxième contenant 80 est démontable, ce qui contribue à simplifier les opérations de maintenance et de réparation des équipements de la deuxième catégorie 68. Ce deuxième contenant 78 est positionné sur le contenant de raccordement 80 ou légèrement décalé par rapport à ce dernier. Cet agencement améliore l'accessibilité au deuxième contenant 78, ce qui contribue à faciliter les opérations de démontage du deuxième contenant 78. Le premier contenant 76 étant positionné au-dessus du contenant de raccordement 80, le positionnement du deuxième contenant 78 sur le contenant de raccordement 80 ou légèrement décalé par rapport à ce dernier contribue à améliorer la compacité du dispositif d'alimentation en hydrogène et réduit son encombrement dans un plan horizontal. Cela permet également de réduire la longueur du (ou des) tronçon(s) de raccordement 60.

Selon un mode de réalisation, le tronçon de raccordement 60 comprend au moins un collecteur de raccordement C60 assurant une continuité fluidique entre un ou plusieurs premier(s) tronçon(s) 56 (ou un ou plusieurs premier(s) contenant(s) 76) et un ou plusieurs deuxième(s) tronçon(s) 58 (ou un ou plusieurs deuxième(s) contenant(s) 78). Ce collecteur de raccordement C60 peut comprendre au moins une entrée et/ou au moins une sortie en attente pour pouvoir raccorder un nouvel équipement, un premier ou deuxième tronçon 56, 58 d'un premier ou deuxième contenant 76, 78 supplémentaire.

Selon un agencement, ce collecteur de raccordement C60 est rigide et configuré pour être relié, grâce au premier système de liaison 82, à la structure d'aéronef A et/ou au réservoir d'hydrogène 52.

Selon un mode de réalisation, le collecteur de raccordement C60 est configuré pour canaliser de l'hydrogène à l'état cryogénique avec un haut niveau de sécurité en matière de fuite. A titre d'exemple, le collecteur de raccordement C60 comprend une double enveloppe. Dans ce cas, le contenant de raccordement 80 n'est pas nécessaire. Chaque premier contenant 76 peut être relié par le deuxième système de liaison 84 au collecteur de raccordement C60. Dans ce cas, le premier contenant 76 est relié à la structure d'aéronef A et/ou au réservoir d'hydrogène 52 par l'intermédiaire du collecteur de raccordement C60. En parallèle, chaque deuxième contenant 78 peut être relié par le troisième système de liaison 88 au collecteur de raccordement C60. Dans ce cas, le deuxième contenant 78 est relié à la structure d'aéronef A et/ou au réservoir d'hydrogène 52 par l'intermédiaire du collecteur de raccordement C60.

Ce collecteur de raccordement C60 peut être obtenu par moulage ou par une technique d'impression tridimensionnelle.

Le collecteur de raccordement C60 peut être relié à au moins un premier tronçon 56 par une liaison permanente de type soudage pour limiter les risques de fuite. En variante, il peut être relié à au moins un premier tronçon 56 par un système de raccordement configuré pour occuper alternativement des états connecté et déconnecté.

Selon un mode de réalisation, pour au moins un premier contenant 76, le premier tronçon 56 comprend au moins un premier collecteur C56 rigide, positionné dans le premier contenant 76, auquel sont reliés plusieurs équipements de la première catégorie 66. Selon une configuration, ce premier collecteur C56 s'étend selon une direction sensiblement verticale et parallèle à l'axe de révolution A76. Ce premier collecteur C56 permet de remplacer plusieurs premiers conduits 70, ce qui contribue à améliorer la compacité du premier tronçon 56 et du premier contenant 76. Selon une configuration, le premier collecteur C56 relie toutes les vannes encapsulées présentes dans le premier contenant 76.

Ce premier collecteur C56 peut être obtenu par moulage ou par une technique d'impression tridimensionnelle. Selon une première alternative, le premier collecteur C56 est formé en un seul élément. Selon une deuxième alternative, le premier collecteur C56 est formé de plusieurs éléments de façon à faciliter sa fabrication et/ou sa maintenance.

Selon un mode de réalisation, pour au moins un deuxième contenant 78, le deuxième tronçon 58 comprend au moins un deuxième collecteur C58 rigide, positionné dans le deuxième contenant 78, auquel sont reliés plusieurs équipements de la deuxième catégorie 68. Selon une configuration, ce deuxième collecteur C58 s'étend selon une direction sensiblement horizontale et parallèle à l'axe de révolution A78. Ce deuxième collecteur C58 permet de remplacer plusieurs deuxièmes conduits 72, ce qui contribue à améliorer la compacité du deuxième tronçon 58 et du deuxième contenant 78.

Ce deuxième collecteur C58 peut être obtenu par moulage ou par une technique d'impression tridimensionnelle.

Selon un mode de réalisation visible sur la figure 7, le deuxième contenant 78 comprend au moins un support 90, positionné dans le deuxième contenant 78, sur lequel sont fixés au moins un des équipements de la deuxième catégorie 68, au moins un deuxième conduit 72 reliant des équipements de la deuxième catégorie 68 et/ou au moins un deuxième collecteur C58. De préférence, les équipements sont intégrés de façon dense dans le deuxième contenant 78, ce qui permet de réduire le volume du deuxième contenant 78 afin de faciliter sa manipulation lors d'opérations de maintenance.

## Revendications

1. Dispositif d'alimentation en hydrogène comprenant un réservoir d'hydrogène (52) ainsi qu'au moins un circuit d'hydrogène (54), relié au réservoir d'hydrogène (52), qui comporte :
- au moins un premier tronçon (56), positionné dans un premier contenant (76) étanche à l'air, comprenant au moins un équipement d'une première catégorie (66),
- au moins un deuxième tronçon (58), positionné dans un deuxième contenant (78) étanche à l'air, comprenant au moins un équipement d'une deuxième catégorie (68),
- au moins un tronçon de raccordement (60) qui s'étend entre une première extrémité (60.1) reliée au premier tronçon (56) par un premier système de raccordement (62) et une deuxième extrémité (60.2) reliée au deuxième tronçon (58) par un deuxième système de raccordement (64) démontable ;
**caractérisé en ce que** le tronçon de raccordement (60) est positionné sous le premier contenant (76) et sous le deuxième contenant (78) ou positionné sous le premier contenant (76) et entre le deuxième contenant (78) et le réservoir d'hydrogène (52), et **en ce que** le dispositif d'alimentation en hydrogène comprend au moins un système de liaison (84) reliant d'une part le premier contenant (76) et, d'autre part, le tronçon de raccordement (60), un contenant de raccordement (80) dans lequel est positionné le tronçon de raccordement (60) ainsi qu'un collecteur de raccordement (C60) compris dans le premier tronçon (60) et/ou le réservoir d'hydrogène (52), le système de liaison (84) comprenant plusieurs tiges ou biellettes (84.1) qui présentent chacune une première extrémité reliée au réservoir d'hydrogène (52) ainsi qu'une deuxième extrémité reliée au premier contenant (76).

2. Dispositif d'alimentation en hydrogène selon la revendication 1, **caractérisé en ce que** le tronçon de raccordement (60) comprend au moins un collecteur de raccordement (C60) rigide assurant une continuité fluidique entre le premier tronçon (56) et le deuxième tronçon (58), ledit collecteur de raccordement (C60) étant configuré pour être relié à une structure d'aéronef (A) et/ou au réservoir d'hydrogène (52).

3. Dispositif d'alimentation en hydrogène selon l'une des revendications précédentes, **caractérisé en ce que** le dispositif d'alimentation en hydrogène comprend au moins un contenant de raccordement (80), dans lequel est positionné le tronçon de raccordement (60), comprenant une première paroi (F80) sensiblement horizontale ; le premier contenant (76) étant positionné au-dessus de la première paroi (F80) et comportant une paroi inférieure (F76) en contact avec la première paroi (F80) ou faiblement espacée de cette dernière.

4. Dispositif d'alimentation en hydrogène selon l'une des revendications précédentes, **caractérisé en ce que** le premier contenant (76) est cylindrique et présente un axe de révolution (A76) sensiblement vertical.

5. Dispositif d'alimentation en hydrogène selon l'une des revendications précédentes, **caractérisé en ce que** le premier tronçon (56) comprend un premier collecteur (C56) rigide, positionné dans le premier contenant (76), auquel sont reliés plusieurs équipements de la première catégorie (66).

6. Dispositif d'alimentation en hydrogène selon les revendications 4 et 5, **caractérisé en ce que** le premier collecteur (C56) s'étend selon une direction parallèle à l'axe de révolution (A76).

7. Dispositif d'alimentation en hydrogène selon l'une des revendications précédentes, **caractérisé en ce que** le premier système de raccordement (62) est permanent.

8. Dispositif d'alimentation en hydrogène selon l'une des revendications 1 à 6, **caractérisé en ce que** le premier système de raccordement (62) est démontable

9. Dispositif d'alimentation en hydrogène selon l'une des revendications précédentes, **caractérisé en ce que** le deuxième contenant (78) est cylindrique et présente un axe de révolution (A78) sensiblement horizontal.

10. Dispositif d'alimentation en hydrogène selon l'une des revendications précédentes, **caractérisé en ce que** le deuxième tronçon (58) comprend au moins un deuxième collecteur (C58) rigide, positionné dans le deuxième contenant (78), auquel sont reliés plusieurs équipements de la deuxième catégorie (68).

11. Dispositif d'alimentation en hydrogène selon les revendications 9 et 10, **caractérisé en ce que** le deuxième collecteur (C58) s'étend selon une direction parallèle à l'axe de révolution (A78).

12. Dispositif d'alimentation en hydrogène selon l'une des revendications précédentes, **caractérisé en ce que** le deuxième contenant (78) comprend au moins un support (90) sur lequel sont fixés au moins un des équipements de la deuxième catégorie (68), au moins un conduit (72) reliant des équipements de la deuxième catégorie (68) et/ou au moins un deuxième collecteur (C58).

13. Dispositif d'alimentation en hydrogène selon l'une des revendications précédentes, **caractérisé en ce que** le dispositif d'alimentation en hydrogène comprend au moins un système de liaison (88) démontable configuré pour relier d'une part le deuxième contenant (78) et, d'autre part, le tronçon de raccordement (60) ainsi qu'un contenant de raccordement (80) dans lequel est positionné le tronçon de raccordement (60) et/ou une structure d'aéronef (A).

14. Aéronef comprenant au moins un dispositif d'alimentation en hydrogène selon l'une des revendications précédentes.
